# EUROPÄISCHE PATENTSCHRIFT

(11) **EP 2 990 708 B1**
(45) Veröffentlichungstag und Bekanntmachung des Hinweises auf die Patenterteilung: **09.05.2018**
(21) Anmeldenummer: 15171315.3
(22) Anmeldetag: 10.06.2015
(51) Int. Cl.: F16L 37/10, F02M 35/10

(54) **KUPPLUNGSSYSTEM ZUR VERBINDUNG ZWEIER MEDIENFÜHRENDER ELEMENTE**
COUPLING SYSTEM FOR CONNECTING TWO FLUID CONDUCTING ELEMENTS
SYSTÈME DE COUPLAGE DE DEUX ELEMENTS DE TRANSPORT DE FLUIDE

(30) Priorität: 28.08.2014 DE 102014217141
(43) Veröffentlichungstag der Anmeldung: 02.03.2016
(73) Patentinhaber: ContiTech MGW GmbH, 34346 Hannoversch-Münden (DE)
(72) Erfinder: Jünemann, Jens, 37191 Katlenburg-Lindau (DE); Tauber, Marco, 34130 Kassel (DE); Plezko, Alexander, 34123 Kassel (DE)
(74) Vertreter: Finger, Karsten

(56) Entgegenhaltungen:
- EP-A1- 0 452 172
- WO-A1-2014/056652
- DE-A1- 10 030 274
- DE-C1- 4 107 603
- US-A1- 2007 120 362

## Beschreibung

Die Erfindung betrifft ein Kupplungssystem zur Verbindung zweier medienführender Elemente gemäß dem Oberbegriff des Anspruchs 1.

Es sind seit langem Kupplungssysteme für Schläuche zum Transport von Medien, insbesondere von fluiden Medien (Flüssigkeiten), bekannt. Üblicherweise werden diese Kupplungssysteme dazu verwendet, den Schlauch mit z.B. einem Aggregat zu verbinden. Hierzu wird an einem Ende des Schlauches ein Verbindungsstück angeordnet, welches an der gegenüberliegenden Seite mit einem Stutzen des Aggregats verbunden werden kann. Die Verbindung zwischen dem schlauchseitigen Verbindungsstück und dem aggregatseitigen Stutzen wird üblicherweise mit einer Haltefeder oder Sicherungsfeder gesichert, welche von außen durch das Verbindungsstück hindurch hinter eine Erhebung des Stutzens greift und so die axiale Bewegung blockiert.

Die DE 100 55 348 A1 betrifft eine Schlauchverbindung mit einer inneren Hülse, in welche ein Schlauchende gedrückt ist, einer äußeren Hülse, welche um die innere Hülse herum angeordnet und mit einem weiteren Schlauch oder einem Aggregat verbunden ist, und Sicherungsmitteln, um die zusammengefügten Hülsen zu fixieren. Diese Sicherungsmittel können eine Sicherungsfeder sein, welche durch Spalte der äußeren Hülse hindurch hinter Hervorhebungen der inneren Hülse greift und so eine axiale Bewegung der beiden Hülsen gegeneinander blockiert.

Derartige Kupplungssysteme z.B. der Firmen HENN GmbH & Co KG oder NORMA Group SE oder des VDA (Verband der Automobilindustrie e. V.) werden auch als Steckverbindungssysteme oder Schnellkupplungen bezeichnet. Diese werden z.B. in der Automobilindustrie bei Schlauchverbindungen oder Rohranwendungen im Ladeluft- und Kühlwasserbereich eingesetzt. Die Komponenten dieser Kupplungssysteme können vollständig aus Metall bestehen oder teilweise aus Metall und teilweise aus Kunststoff.

Nachteilig ist bei den bekannten Kupplungssystemen, dass die Kupplung zwischen Schlauch und Aggregat mit mehreren Handgriffen in der Montage herzustellen ist. Dies ist insbesondere durch die Handhabung der Sicherungsfeder bedingt, welche ein separates Bauteil des Kupplungssystems darstellt. So ist die Sicherungsfeder mit der richtigen Öffnung an der richtigen Stelle über die zusammengefügten Hülsen zu positionieren und dann radial durch die äußere Hülse hindurch zu drücken, um die beiden Hülsen gegeneinander zu sichern. Dies kann gerade bei engen Montageräumen zwischen den Motorkomponenten schwierig und aufwendig sein. Ferner kann die Sicherungsfeder bei der Montage bzw. schon bei der Anlieferung und Bereitstellung verloren gehen.

Die US 2007 120 362 A1 betrifft eine Schnellkupplungsverbindung zur Verbindung einer ersten Rohrleitung mit einer zweiten Rohrleitung. Die eine Rohrleitung weist einen Kupplungskörper auf, welcher feststehend mit der Rohrleitung verbunden und ausgebildet ist, die andere Rohrleitung axial aufzunehmen. Innerhalb des Kupplungskörpers ist ein Verriegelungskörper angeordnet, welcher um die axiale Richtung gedreht werden kann. Der Verriegelungskörper weist mehrere in Umfangsrichtung beabstandete Eingriffselemente auf, welche radial nach innen zeigende Kanten besitzen und in radialer Richtung federnd ausgelenkt werden können. Die Auslenkung der Eingriffselemente kann durch radial nach außen zeigende Vorsprünge des Kupplungskörpers erfolgen.

Zur Montage der anderen Rohrleitung wird diese axial in den Kupplungskörper eingeschoben, wobei die Eingriffselemente derart in Drehrichtung positioniert sind, dass sie von einer in Umfangsrichtung verlaufenden Kante der anderen Rohrleitung radial nach außen gedrückt und diese Kante hintergreifen können. In diesem Zustand kann der Verriegelungskörper über die Eingriffselemente gedreht werden, so dass die Möglichkeit der Eingriffselemente, radial nach außen zu federn, blockiert werden kann. Auf diese Weise kann die andere Rohrleitung im Kupplungskörper gesichert gehalten werden.

Zur Demontage kann der Verriegelungskörper in eine Position gedreht werden, so dass die Eingriffselemente des Verriegelungskörpers von den Vorsprüngen des Kupplungskörpers radial nach außen ausgelenkt werden. Hierdurch kann das Hintergreifen der Kante der anderen Rohrleitung aufgehoben und diese in axialer Richtung aus dem Kupplungskörper entfernt werden. Der Verriegelungskörper lässt sich hierbei in Umfangsrichtung zwischen diesen beiden Positionen bewegen.

Die EP 0 452 172 A1 betrifft einen Schnellmontage-Clip, der insbesondere zur Montage von Wärmetauschern an den Kühlkreisläufen von Kraftfahrzeugen bestimmt ist. Der Clip dient der Verlinkung zwischen zwei Verbindungs-Ansatzstücken in axialer Richtung, wobei die Clip einen Verriegelungsring aufweist, der dazu bestimmt ist, mit einem der beiden Ansatzstücke verbunden zu sein und der mindestens zwei radiale Vorsprünge aufweist, die dazu bestimmt sind, in entsprechende Aussparungen einzurasten, die in den beiden Ansatzstücken ausgespart sind.

Die WO 2014 056 652 A1 betrifft eine Kupplungseinrichtung zur Verbindung von luftführenden Komponenten einer Frischluftanlage für eine Brennkraftmaschine, mit einem Anschluss, der einen daran zumindest zwischen einer Sicherungsstellung und einer Entsicherungsstellung in der Umfangsrichtung verstellbar angeordneten Rastring aufweist, mit einem in den Anschluss axial einsteckbaren Stutzen, der eine außenliegende Sicherungsnut aufweist, wobei der Rastring wenigstens ein Rastelement aufweist, das radial federelastisch am Rastring angeordnet ist, wobei der Anschluss einen Sicherungsring aufweist, wobei der Rastring ober das jeweilige Rastelement durch den Sicherungsring axial am Anschluss fixiert ist, wobei im eingesteckten Zustand des Stutzens und in der Sicherungsstellung des Rastrings das jeweilige Rastelement radial in die Sicherungsnut eingreift und so den Stutzen in axialer Richtung gegen ein unbeabsichtigtes Lösen am Anschluss sichert.

Eine Aufgabe der vorliegenden Erfindung ist es, ein Kupplungssystem der eingangs beschriebenen Art bereit zu stellen, welches ein schnelles und einfaches Montieren des Kupplungssystems mit einfacher und präziser Verriegelung sowie einem Minimum erforderlicher Komponenten ermöglicht.

Die Aufgabe wird erfindungsgemäß durch ein Kupplungssystem mit den Merkmalen gemäß Anspruch 1 gelöst. Vorteilhafte Weiterbildungen sind in den Unteransprüchen beschrieben.

Somit betrifft die vorliegende Erfindung ein Kupplungssystem gemäß dem Oberbegriff des Anspruchs 1, wobei das Eingriffselement des Verriegelungskörpers durch eine Drehbewegung zwischen der ersten Position, in der das Eingriffselement außerhalb des Inneren des Kupplungskörpers positioniert ist, und der zweiten Position, in der das Eingriffselement durch die Ausnehmung hindurch radial in das Innere des Kupplungskörpers hineinragt, bewegt werden kann.

Mit anderen Worten erfolgt das Verriegeln bzw. das Lösen des Anschlusskörpers in dem Kupplungskörper durch eine Drehbewegung des Verriegelungskörpers. Dabei befindet sich der Verriegelungskörper in der ersten Position in einer Drehstellung, so dass sein Eingriffselement den Anschlusskörper im Kupplungskörper freigibt, und in der zweiten Position in einer Drehstellung, so dass sein Eingriffselement den Anschlusskörper im Kupplungskörper in Längsrichtung blockiert. Der Anschlusskörper kann Bestandteil eines Aggregats und der Kupplungskörper kann mit einem Schlauchende oder einem Rohrende, beides vorzugsweise aus Kunststoff, verbunden sein.

Diese Drehbewegung stellt einen einfachen Montagehandgriff dar, der zu einer einfachen und sicheren Verriegelung führt. Durch die Verwendung des Kupplungskörpers und des Verriegelungskörpers wird die Anzahl der Komponenten des Kupplungssystems minimiert, was die Kosten reduziert und die Handhabung vereinfacht. Auf diese Weise wird auch ein kompaktes System bereitgestellt, welches auch in engen Montageräumen eingesetzt und vergleichsweise gut gehandhabt werden kann. Auch lässt das erfindungsgemäße Kupplungssystem unter Belastung sowohl in radialer als auch in axialer Richtung minimale Kräfte und Spannungen in dem Kupplungskörper sowie in dem Anschlusskörper zu. Diese Kräfte und Spannungen werden erfindungsgemäß von dem Verriegelungskörper aufgrund seiner Geometrie an den Fügeflächen aufgenommen. Gleichzeitig sichert der Verriegelungskörper die Abdichtung des Kupplungssystems, welche mittels eines innenliegenden Dichtungselementes erfolgen kann. Die Drehbewegung erfolgt vorzugsweise möglichst kurz, um die Montage zu vereinfachen und die Stabilität der Verbindung zu erhöhen, und liegt vorzugsweise in einem Winkelbereich zwischen 40° und 20°, besonders bevorzugt bei ungefähr 28°.

Vorzugsweise weist der Verriegelungskörper mehrere Eingriffselemente, besonders bevorzugt drei Eingriffselemente, auf, die gleichmäßig über den Umfang verteilt angeordnet sind, d.h. um 120° zueinander versetzt sind. Der Kupplungskörper weist eine entsprechende Anzahl von Ausnehmung auf. Hierdurch werden die Haltekräfte gleichmäßiger auf den Kupplungskörper bzw. Verriegelungskörper verteilt und hierdurch die Haltbarkeit der Kupplungsverbindung verbessert.

Erfindungsgemäß weist der Kupplungskörper eine Vertiefung und der Verriegelungskörper eine Erhebung auf, so dass in der zweiten Position der Drehbewegung die Erhebung in die Vertiefung eingreifen und die Drehbewegung blockieren oder erschweren kann. Hierdurch kann die erreichte zweite Position der Drehbewegung als Verriegelungsposition des Kupplungssystems in Form einer Raststellung gesichert werden, damit sich diese Verbindung gar nicht mehr bzw. nur mit erhöhtem Kraftaufwand wieder lösen lässt. Dies sichert die Kupplungsfunktion des Kupplungssystems. Die Vertiefung bzw. Erhebung kann durch eine Gravierung oder Formgebung des Kupplungskörpers bzw. Verriegelungskörpers vorgesehen sein.

Erfindungsgemäß weist der Kupplungskörper ferner eine erste radiale Erhebung auf, welche eine Bewegung des Verriegelungskörpers in Längsrichtung in wenigstens einer Richtung blockiert. Diese radiale Erhebung kann ein Steg sein, der nur teilweise in Umfangsrichtung ausgebildet ist, oder ein geschlossener stegförmiger Ring, der vollständig in Umfangsrichtung ausgebildet ist. Es können auch mehrere erste radiale Erhebungen vorgesehen sein, die in Umfangsrichtung gegeneinander versetzt auf dem gleichen Umfang angeordnet sind. Diese radiale Erhebung schränkt die Bewegungsmöglichkeiten des Verriegelungskörpers in wenigstens eine Richtung entlang der Längsachse ein und ermöglicht so eine gewisse Vorpositionierung des Verriegelungskörpers für die Montage. Sie dient dadurch gleichzeitig als Verliersicherung.

Erfindungsgemäß weist der Kupplungskörper ferner eine zweite radiale Erhebung auf, welche eine Bewegung des Verriegelungskörpers in Längsrichtung in einer weiteren Richtung blockiert, so dass der Verriegelungskörper in Längsrichtung lediglich zwischen der ersten radialen Erhebung und der zweiten radialen Erhebung beweglich ist. Diese zweite radiale Erhebung kann der ersten radialen Erhebung entsprechen oder andersartig ausgestaltet sein. Die beiden radialen Erhebungen können einander in Längsrichtung teilweise oder direkt gegenüber liegen oder in Umfangsrichtung gegeneinander versetzt angeordnet sein. Es können auch mehrere zweite radiale Erhebungen vorgesehen sein, die in Umfangsrichtung gegeneinander versetzt auf dem gleichen Umfang angeordnet sind. Durch die Kombination der beiden radialen Erhebungen kann der axiale Bewegungsspielraum des Verriegelungskörpers vorbestimmt derart eingeschränkt werden, dass seine genaue axiale Position definiert werden kann. Hierdurch kann der Verriegelungskörper sehr genau für die Montage sowie für seine Verriegelungswirkung vorpositioniert werden.

Erfindungsgemäß ist die zweite radiale Erhebung im ersten Kupplungsbereich angeordnet und derart positioniert, dass sie die Drehbewegung des Verriegelungskörpers in zumindest einer Richtung blockieren kann. Dies kann dadurch erfolgen, dass die zweite radiale Erhebung mit einer Seite des Eingriffselements in Kontakt kommen kann und dann eine weitere Drehbewegung verhindert. Hierdurch kann das Maß der Drehbewegung des Eingriffselementes, d.h. dessen Winkel, vorbestimmt eingeschränkt werden. Diese Funktion kann alternativ auch durch ein weiteres separates Element ausgeübt werden.

Gemäß einem Aspekt der vorliegenden Erfindung ragt das Eingriffselement in der zweiten Position soweit durch die Ausnehmung radial in das Innere des Kupplungskörpers hinein, dass das Eingriffselement den im ersten Kupplungsbereich aufgenommenen Anschlusskörper in Längsrichtung blockieren kann. Dies kann dadurch erfolgen, dass das Eingriffselement radial von außen auf den Anschlusskörper drückt und diesen dadurch kraftschlüssig blockiert. Alternativ oder zusätzlich kann diese Blockade formschlüssig erfolgen, indem das Eingriffselement hinter eine entsprechende radiale Erhebung wie z.B. einen Wulst des Anschlusskörpers greift.

Gemäß einem weiteren Aspekt der vorliegenden Erfindung kann das Eingriffselement in der zweiten Position radial hinter eine erste radiale Erhebung des im ersten Kupplungsbereich aufgenommenen Anschlusskörpers greifen und in Längsrichtung blockieren. Dies ist vorteilhaft, weil diese Art der formschlüssigen Verbindung mit einfacheren Mitteln höhere Kräfte aushalten kann und hierdurch eine haltbarere und sicherere Verbindung darstellt als eine kraftschlüssige Verbindung.

Gemäß einem weiteren Aspekt der vorliegenden Erfindung ist der Verriegelungskörper geschlossen ringförmig ausgebildet. Dies erhöht die Haltbarkeit der Kupplungsverbindung, weil ein geschlossener Ringkörper höhere Kräfte aufnehmen kann. Auch kann ein geschlossener Ringkörper weniger leicht verloren gehen, weil er nur noch durch axiale Bewegungen in Längsrichtung von dem Kupplungskörper entfernt werden kann.

Gemäß einem weiteren Aspekt der vorliegenden Erfindung ist der Verriegelungskörper über ein Federelement mit dem Eingriffselement verbunden. Dies ermöglicht die radiale Federung des Eingriffselementes zwischen der ersten Position und der zweiten Position. Hierbei werden Federkräfte radial auf das Eingriffselement derart ausgeübt, dass sich dieses bei der Drehbewegung aus der ersten in die zweite Position selbstständig durch die Ausnehmung des Kupplungskörpers in dessen Innere hineindrückt. Die Federkräfte werden durch Spannungen im Material erreicht, so dass auch weitere Elemente verzichtet werden kann, was die Herstellung und Montage vereinfacht und dadurch günstiger gestaltet.

Gemäß einem weiteren Aspekt der vorliegenden Erfindung kann das Eingriffselement in der ersten Position von dem Kupplungskörper radial federnd weggedrückt werden. Hierdurch wird die nötige Spannung in dem Federelement aufgebaut, um bei der Drehbewegung in die zweite Position das Eingriffselement durch die Ausnehmung des Kupplungskörpers hindurch in dessen Inneres hinein zu drücken. In der zweiten Position ist keine bzw. lediglich eine geringe Federkraft erforderlich, weil sich das Eingriffselement dann im Eingriff mit dem Anschlusskörper befindet. Vorzugsweise werden in Umfangsrichtung beidseitig des Federelements in Längsrichtung verlaufende Aussparungen im Verriegelungskörper vorgesehen, um dessen Federwirkung zu erhöhen bzw. die gleiche Federwirkung bei einer in Längsrichtung kompakteren Ausführung des Verriegelungskörpers zu erreichen.

Gemäß einem weiteren Aspekt der vorliegenden Erfindung weist das Eingriffselement eine schräge Kante auf, welche sich sowohl radial als auch in Umfangsrichtung erstreckt und welche mit dem Kupplungskörper in Kontakt kommen kann, so dass das Eingriffselement bei der Drehbewegung über den Kontakt zwischen Kupplungskörper und seiner schrägen Kante von dem Kupplungskörper radial federnd weggedrückt werden kann. Der Kupplungskörper kann eine entsprechende korrespondierende schräge Kante aufweisen. An seiner schrägen Kante gleitet das Eingriffselement bei der Drehbewegung an der (schrägen) Kante der Ausnehmung des Kupplungskörpers entlang, so dass über diesen Kontakt sowie die Federkraft des Federelements die Drehbewegung des Verriegelungskörpers in ein radiales Eingreifen seines Eingriffselementes übertragen werden kann. Im umgekehrten Fall des Lösens der Kupplungsverbindung kann das Federelement über seine schräge Kante alleinig durch die Drehbewegung aus der zweiten Position zurück in die erste Position an der (schrägen) Kante des Kupplungskörpers aus der Ausnehmung heraus bewegt werden.

Gemäß einem weiteren Aspekt der vorliegenden Erfindung weist der Kupplungskörper ein erstes Markierungselement und der Verriegelungskörper ein zweites Markierungselement auf, welche in der zweiten Position der Drehbewegung in Längsrichtung einander direkt gegenüberliegen können. Diese Markierungselemente können farblich und bzw. oder durch Formgebung an der Oberfläche des Kupplungskörpers bzw. Verriegelungskörpers ausgebildet sein. Sie dienen der optischen Kontrolle der zweiten Position der Drehbewegung als Verriegelungsposition (Arretierungsposition) des Kupplungssystems. Liegen sich, mit anderen Worten, die beiden Markierungselemente in Längsrichtung genau gegenüber, so wird hierdurch visuell angezeigt, dass das Kupplungssystem verriegelt ist, d.h. der Arretierungszustand eingenommen ist.

Gemäß einem weiteren Aspekt der vorliegenden Erfindung sind der Kupplungskörper und der Verriegelungskörper aus Kunststoff. Dies reduziert das Gewicht und die Kosten dieser Körper. Gleichzeitig lässt sich hierdurch die Lebensdauer des Kupplungssystems aufgrund besserer Aufnahme statischer und dynamischer Belastungen verlängern.

Gemäß einem weiteren Aspekt der vorliegenden Erfindung weist der Kupplungskörper einen zweiten Kupplungsbereich mit einer zweiten radialen Erhebung und bzw. oder einer Profilierung auf. Dieser zweite Kupplungsbereich dient dem Anschluss des Kupplungskörpers an einen Schlauch. Hierzu kann der Kupplungskörper in diesem zweiten Kupplungsbereich eine radiale Erhebung in Form eines in Umfangsrichtung teilweise oder durchgehend ausgebildeten Wulstes als zweite radiale Erhebung aufweisen, über den der Schlauch bei der Montage geschoben wird. Der Schlauch kann dann z.B. mittels einer Schlauchschelle zwischen Wulst und übrigem Kupplungskörper an diesem befestigt werden, wobei der Wulst ein Abrutschen des Schlauches verhindern kann. Anstelle einer Schlauchschelle kann auch ein Klemmring oder eine Kunststoffumspritzung oder Kunststoffschweißung vorgesehen werden. Alternativ oder zusätzlich kann der Kupplungskörper in diesem zweiten Kupplungsbereich eine Profilierung z.B. in Form einer Riffelung oder eines Sägezahnprofils aufweisen, die den Reibwiderstand der Oberfläche des Kupplungskörpers erhöht und hierdurch ebenfalls einem Abziehen des Schlauches entgegenwirken kann.

Vorzugsweise weist der Kupplungskörper zwischen dem ersten Kupplungsbereich und dem zweiten Kupplungsbereich einen konischen Übergangsbereich auf, dessen Durchmesser sich vom ersten Kupplungsbereich zum zweiten Kupplungsbereich hin verringert. Hierdurch kann der Kupplungskörper im Durchmesser kleiner und kompakter ausgebildet werden, weil der Kupplungskörper in seinem ersten Kupplungsbereich den Anschlusskörper in seinem Inneren und in seinem zweiten Kupplungsbereich den Schlauch von außen aufnimmt.

Gemäß einem weiteren Aspekt der vorliegenden Erfindung ist im Inneren des Kupplungskörpers ein Dichtungselement zum Abdichten zwischen dem Kupplungskörper und dem Anschlusskörpers angeordnet. Das Dichtungselement kann ein O-Ring oder ein 2-Lippen-System sein, welches in Umfangsrichtung geschlossen ringförmig ausgebildet sein kann. Es kann aus eine silikonartigen oder thermoplastischen Material bestehen bzw. ein solches aufweisen. Das Dichtungselement kann gegen axiale Verschiebung mit einem Sperrelement gesichert sein, welches ebenfalls in Umfangsrichtung geschlossen ringförmig ausgebildet sein kann. Das Sperrelement ist vorzugsweise als Kunststoffteil ausgebildet und im Inneren des Kupplungskörpers eingeschweißt oder eingespritzt.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Kupplungssystems;
- Fig. 2: eine schematische Schnittdarstellung eines Teilbereichs des erfindungsgemäßen Kupplungssystems;
- Fig. 3: eine perspektivische schematische Darstellung eines erfindungsgemäßen Kupplungselements;
- Fig. 4: eine perspektivische schematische Darstellung eines erfindungsgemäßen Verriegelungselements;
- Fig. 5: eine schematische Schnittdarstellung des erfindungsgemäßen Kupplungssystems mit Anschlusselement; und
- Fig. 6: einen Ausschnitt der Fig. 5.

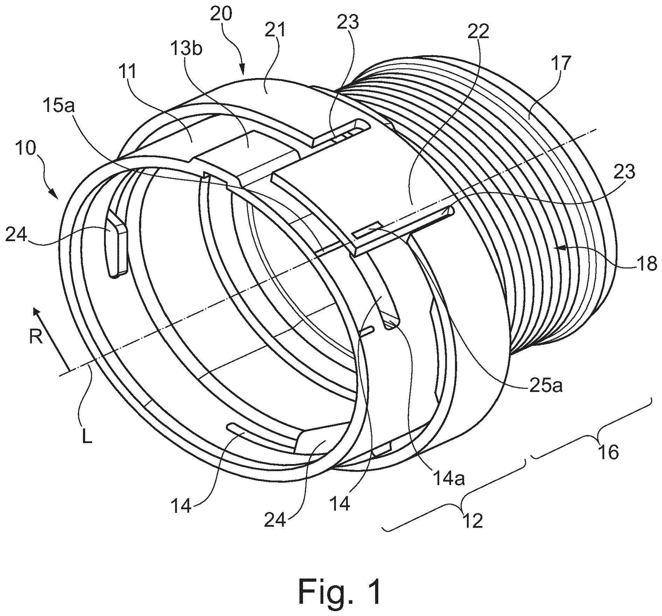

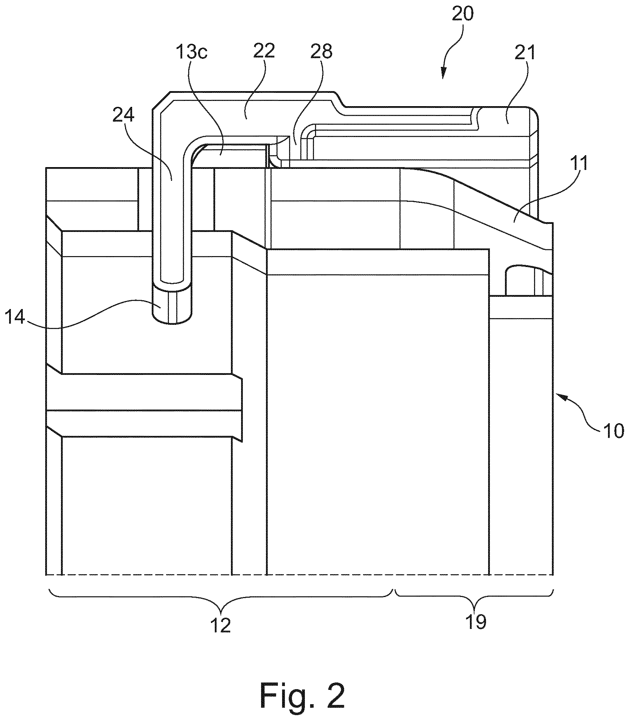

Fig. 1 zeigt eine perspektivische schematische Darstellung eines erfindungsgemäßen Kupplungssystems 10, 20. Fig. 2 zeigt eine schematische Schnittdarstellung eines Teilbereichs des erfindungsgemäßen Kupplungssystems 10, 20. Das Kupplungssystem 10, 20 weist ein Kupplungselement 10, welches auch als Kupplungsgehäuse 10 bezeichnet werden kann, und ein Verriegelungselement 20 auf, welches auch als Verriegelungsring 20 bezeichnet werden kann. Das Kupplungselement 10 und das Verriegelungselement 20 sind im Wesentlichen zylindrisch bzw. ringförmig geschlossen ausgebildet, bestehen aus Kunststoff und erstrecken sich entlang einer gemeinsamen Längsachse L.

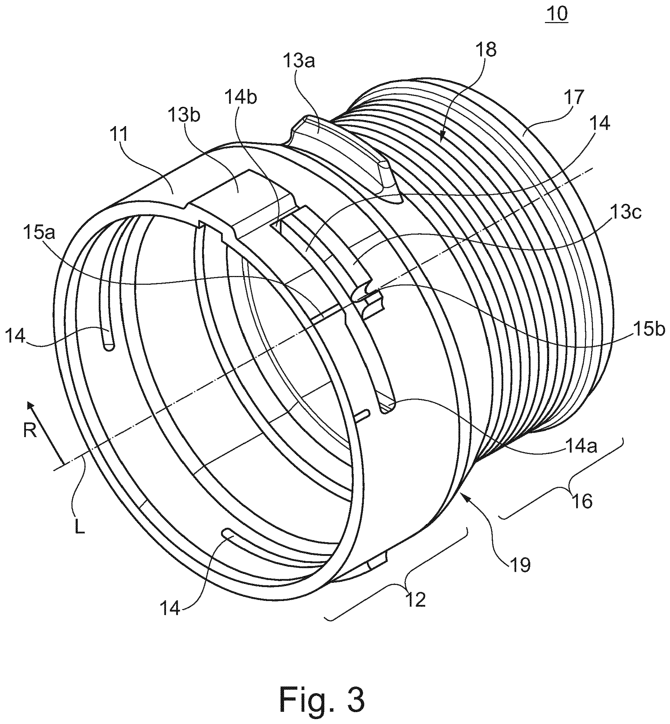

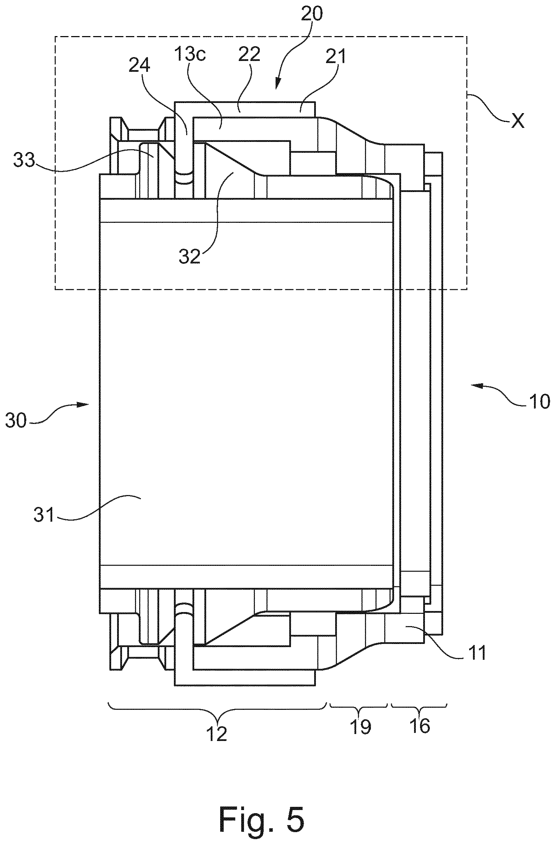

Fig. 3 zeigt eine perspektivische schematische Darstellung eines erfindungsgemäßen Kupplungselements 10. Das Kupplungselement 10 weist einen Kupplungskörper 11 auf. Der Kupplungskörper 11 weist einen ersten Kupplungsbereich 12 und einen zweiten Kupplungsbereich 16 auf. Der erste Kupplungsbereich 12 dient der Aufnahme eines Anschlusselements 30 eines Aggregats (vgl. Fig. 5). Das Anschlusselement 30 kann ein Aggregatstutzen 30 z.B. auf der VDA-Norm basierend oder ein Steckverbinder 30 sein. Der zweite Kupplungsbereich 16 dient der Aufnahme eines Schlauches oder Rohres, insbesondere aus Kunststoff (nicht dargestellt). Der erste Kupplungsbereich 12 wird vom Verriegelungselement 20 ringförmig umgeben. Der erste Kupplungsbereich 12 und der zweite Kupplungsbereich 16 werden durch einen konischen Übergangsbereich 19 verbunden, wobei der Durchmesser des Kupplungskörpers 11 vom ersten Kupplungsbereich 12 zum zweiten Kupplungsbereich 16 hin abnimmt.

Der Kupplungskörper 11 weist in seinem ersten Kupplungsbereich 12 drei Ausnehmungen 14 auf, die in Form von Nuten 14 in Umfangsrichtung verlaufen. Die Ausnehmungen 14 sind in Umfangsrichtung äquidistant verteilt angeordnet, d.h. um 120° versetzt, und verbinden das Innere des Kupplungskörper 11 mit seiner äußeren Umgebung. Jede Ausnehmung 14 weist eine schräge Kante 14a auf, welche sich sowohl in Umfangsrichtung als auch in radiale Richtung R erstreckt, sowie eine senkrechte Kante 14b, welche sich lediglich in radiale Richtung R erstreckt.

Der Kupplungskörper 11 weist ferner eine erste radiale Erhebung 13a als erstes Sicherungselement 13a auf, welche sich vom konischen Übergangsbereich 19 radial nach außen erstreckt. Der Kupplungskörper 11 weist ferner eine zweite radiale Erhebung 13b als zweites Sicherungselement 13b auf, welche sich im ersten Kupplungsbereich 12 radial nach außen erstreckt und in Umfangsrichtung derart positioniert ist, dass sie der ersten radialen Erhebung 13a in Längsrichtung L direkt gegenüberliegt. Der Kupplungskörper 11 weist ebenfalls dritte radiale Erhebungen 13c als dritte Sicherungselemente 13c auf, welche sich in Umfangsrichtung direkt entlang der Ausnehmungen 14 von deren zweiten Kanten 14b bis etwa zur Mitte der Ausnehmungen 14 erstrecken. Diese dritten radialen Erhebungen 13c weisen jeweils eine Vertiefung 15b in Form einer Einkerbung 15b oder Rille 15b auf, die sich in Längsrichtung L erstreckt. Der Kupplungskörper 11 weist ferner ein erstes Markierungselement 15a auf, welches auf seiner Oberfläche von außen sichtbar angebracht ist und sich in Längsrichtung L erstreckt.

An seinem zweiten Kupplungsbereich 16 weist der Kupplungskörper 11 eine zweite radiale Erhebung 17 in Form einer Wulst 17 auf, die sich in Umfangsrichtung geschlossen erstreckt. Zwischen der Wulst 17 und dem konischen Übergangsbereich 19 weist der Kupplungskörper 11 eine Profilierung 18 in Form einer Riffelung 18 auf. Die Wulst 17 und die Riffelung 18 dienen der Aufnahme eines aufgesteckten Schlauches (nicht dargestellt) und sollen durch die Erhöhung der Reibkräfte bewirken, so dass der Schlauch sich nicht vom Kupplungskörper 11 abziehen lässt. Hierzu kann der Schlauch auf der Riffelung 18 mittels eines Pressrings, einer Schlauchschelle oder einer Kunststoffumspritzung gesichert werden. Alternativ kann ein Kunststoffrohr auch direkt an den konischen Übergangsbereich 19 angeschweißt werden, so dass der zweite Kupplungsbereich 16 mit Riffelung 18 und Wulst 17 entfallen kann.

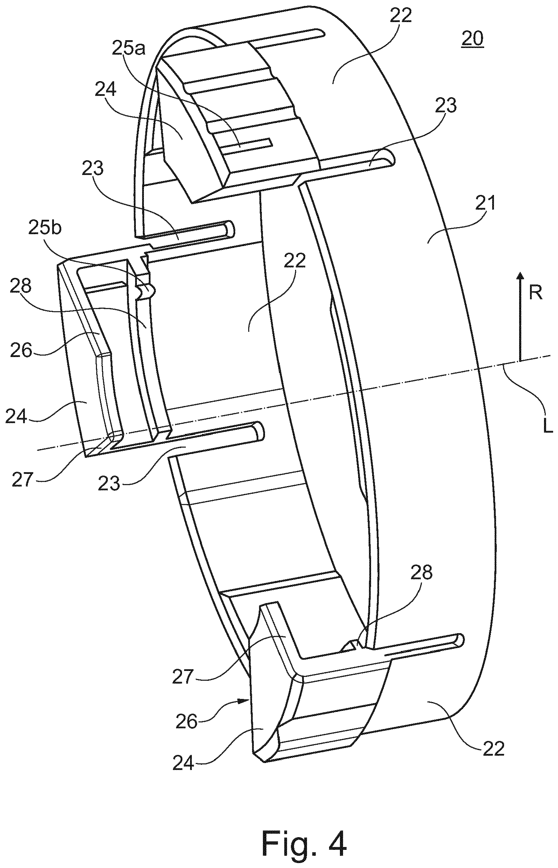

Fig. 4 zeigt eine perspektivische schematische Darstellung eines erfindungsgemäßen Verriegelungselements 20. Das Verriegelungselement 20 weist einen ringförmigen Verriegelungskörper 21 auf. Von dem Verriegelungskörper 21 erstrecken sich in Längsrichtung L drei Federelemente 22, die auch als Stege 22 bezeichnet werden können. Die Federelemente 22 sind in Umfangsrichtung durch in Längsrichtung L verlaufende Spalten 23 teilweise vom Verriegelungskörper 21 getrennt. Die Federelemente 22 weisen an ihren dem Verriegelungskörper 21 gegenüberliegenden Ende jeweils ein Eingriffselement 24 auf, welches auch als Nase 24 oder Haken 24 bezeichnet werden kann und welches sich radial nach innen erstreckt.

Jedes Eingriffselement 24 weist in Umfangsrichtung auf einer Seite eine schräge Kante 26 und auf der gegenüberliegenden Seite eine senkrechte Kante 27 auf. An seiner Außenseite weist jedes Eingriffselement 24 ein zweites Markierungselement 25a auf, welches von außen optisch erkennbar ist und welches sich in Längsrichtung L erstreckt. Auf seiner Innenseite weist jedes Eingriffselement 24 eine in Umfangsrichtung verlaufende und sich radial nach innen erstreckende erste Erhebung 28 in Form einer erste Kante 28 auf. Jeder erste Erhebung 28 weist eine radial nach innen zeigende zweite Erhebung 25b in Form einer zweite Kante 25b auf, welche sich in Längsrichtung L erstreckt und der schrägen Kante 26 das Eingriffselement 24 in Längsrichtung L gegenüberliegend angeordnet ist.

Das Kupplungselement 10 und das Verriegelungselement 20 wirken wie folgt zusammen (vgl. insbesondere Fig. 1):
Der Verriegelungskörper 21 ist im ersten Kupplungsbereich 12 des Kupplungskörpers 11 um diesen herum angeordnet. Hierbei wird der Verriegelungskörper 21 in axialer Richtung, d.h. in Längsrichtung L zwischen der ersten radialen Erhebung 13a und der zweiten radialen Erhebung 13b des Kupplungskörpers 11 positioniert und gehalten, so dass axiale Verschiebungen gar nicht bzw. höchstens minimal möglich sind. Diese Positionierung erfolgt derart, dass sich die Eingriffselemente 24 und die Ausnehmungen 14 auf dem gleichen Umfang befinden. In Umfangsrichtung ist der Verriegelungskörper 21 gegenüber dem Kupplungskörper 11 durch eine Drehbewegung beweglich.

In einer ersten Position der Drehbewegung befinden sich die Eingriffselementes 24 außerhalb der Ausnehmungen 14 oder innerhalb der Ausnehmungen 14, ohne jedoch in das Innere des Kupplungskörpers 11 hinein zu ragen. Vorzugsweise befinden sich die Eingriffselemente 24 außerhalb der Ausnehmungen 14, so dass sie gegen den Kupplungskörper 11 gedrückt werden. In diesem Zustand werden die Federelemente 22 federnd gespannt. Das Innere des Kupplungskörpers 11 ist frei von den Eingriffelementen 24, so dass ein Anschlusselement 30 (vergleiche Fig. 5) in den ersten Kupplungsbereich 12 eingeschoben werden kann.

Ist das Anschlusselement 30 in den ersten Kupplungsbereich 12 eingeschoben worden und soll dort gesichert werden, so wird der Verriegelungskörper 21 aus Blickrichtung des Schlauches im Uhrzeigersinn derart gedreht, dass seine Eingriffselemente 24 in die Ausnehmungen 14 hineingeführt werden und dort hinter eine erste radiale Erhebung 32 des Anschlusskörpers 31 des Anschlusselements 30 (vgl. Fig. 5) greifen und dieses in Längsrichtung L formschlüssig blockieren. Hierbei werden die Eingriffselementes 24 durch die Federkraft der gespannten Federelemente 22 radial nach innen durch die Ausnehmungen 14 hindurch gedrückt. Im Zuge dieser Drehbewegung gleiten die schrägen Kanten 26 der Eingriffselemente 24 und die korrespondierenden schrägen Kanten 14a der Ausnehmungen 14 aneinander ab, bis die Eingriffselemente 24 vollständig in die Ausnehmungen 14 eingegriffen haben.

Die Drehbewegung endet, wenn die senkrechten Kanten 27 der Eingriffselemente 24 an den senkrechten Kanten 14b der Ausnehmungen 14 anschlagen. In dieser zweiten Position der Drehbewegung ist das Anschlusselement 30 durch das Kupplungssystem 10, 20 Längsrichtung L blockiert. Zur Fixierung der zweiten Position der Drehbewegung als Verriegelungsposition bzw. Arretierungsposition greifen die zweiten Erhebungen 25b der Federelemente 22 in die korrespondierenden Vertiefungen 15b des Kupplungskörpers 11 ein, so dass sich die zweite Position der Drehbewegung nur mit erhöhter Kraft gegen die in den Vertiefungen 15b eingerasteten Erhebungen 25b sowie die Federwirkung der Federelemente 22 wieder lösen lässt. In dieser gesicherten zweiten Position der Drehbewegung liegen sich in Längsrichtung L das erste Markierungselement 15 a und das zweite Markierungselement 25a genau gegenüber, so dass von außen die gesicherte zweite Position der Drehbewegung optisch erkannt werden kann.

In der gesicherten zweiten Position der Drehbewegung schließen die Eingriffselemente 24 und die ersten Erhebungen 28 der Federelemente 22 die dritten radialen Erhebungen 13c in Längsrichtung L von beiden Seiten ein. Hierdurch kann das Spiel zwischen Ausnehmungen 14 und Eingriffselementen 24 minimiert und die Stabilität der Sicherung des Anschlusselements 30 erhöht werden.

Ein Lösen dieser Verbindung des Kupplungssystem 10, 20 ist dennoch durch Drehbewegung möglich. Zu diesem Zweck dienen die schrägen Kanten 26 der Eingriffselemente 24 und die schrägen Kanten 14b der Ausnehmungen 14, an denen die Eingriffselemente 24 durch eine Drehbewegung aus Blickrichtung des Schlauches entgegen dem Uhrzeigersinn zurück in die erste Position der Drehbewegung wieder aus den Ausnehmungen 24 heraus bewegt werden können.

Fig. 5 zeigt eine schematische Schnittdarstellung des erfindungsgemäßen Kupplungssystems 10, 20 mit Anschlusselement 30. Der Anschlusskörper 31 des Anschlusselements 30 (VDA-Stutzens 30) ist dabei durch die Eingriffselemente 24 im Inneren des Kupplungskörpers 11 gesichert positioniert. Hierzu hintergreifen die Eingriffselemente 24 die erste radiale Erhebung 32 des Anschlusskörpers 31, welche auch als erste Wulst 32 bezeichnet werden kann. Auf der anderen Seite stößt der Anschlusskörper 31 mit seinem Ende und bzw. oder mit seiner ersten radialen Erhebung 32 in Längsrichtung L gegen das Innere des Kupplungskörpers 11. Zur Minimierung des Spiels und zusätzlichen Sicherung der Verriegelung weist der Anschlusskörper 31 ferner eine zweite radiale Erhebung 33 in Form eines zweiten Wulstes 33 auf, welche den Eingriffselementen 24 in Längsrichtung L gegenüberliegend derart angeordnet ist, dass die erste radiale Erhebung 32 und die zweite radiale Erhebung 33 in der gesicherten zweiten Position die Eingriffselemente 24 in Längsrichtung L beidseitig einfassen.

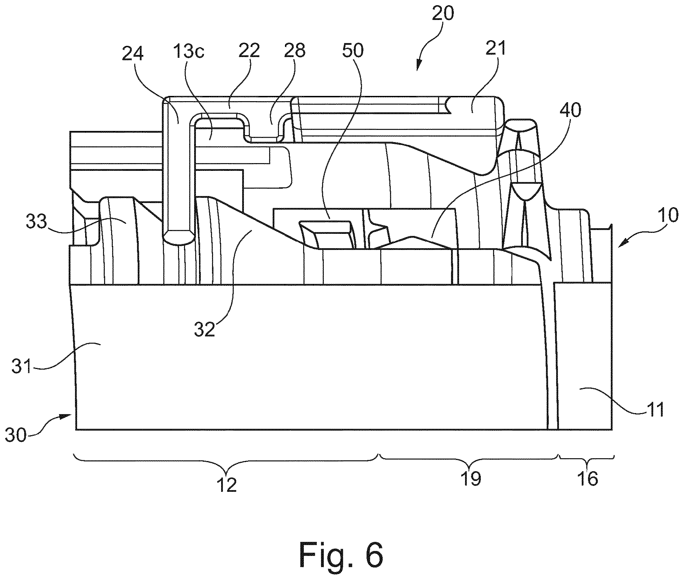

Fig. 6 zeigt einen Ausschnitt der Fig. 5. Neben den bereits zuvor beschriebenen Elementen ist in dieser Ansicht ein Dichtungselement 40 gezeigt, welches als O-Ring oder als 2-Lippen-System ausgebildet und radial zwischen der Innenseite des Kupplungskörpers 11 und der Außenseite des Anschlusskörpers 31 angeordnet ist, um diese beiden Körper 11, 31 gegeneinander fluiddicht abzudichten. Um das Dichtungselement 40 bei der Montage in seiner Position zu sichern, ist ein Sperrelement 50 in Form eines Sperrrings 50 vorgesehen, welches an der Innenseite des Kupplungskörpers 11 radial anliegt und das Dichtungselement 40 in Längsrichtung L sichert. Das Sperrelement 50 ist als Kunststoffteil an dem Kupplungskörper 11 angeschweißt oder angespritzt.

### Bezugszeichenliste (Teil der Beschreibung)

- L: Längsachse, Längsrichtung
- R: radiale Richtung
- X: Ausschnitt

- 10: Kupplungselement, Kupplungsgehäuse
- 11: Kupplungskörper
- 12: erster (aggregatseitiger) Kupplungsbereich
- 13a: erste radiale Erhebung, erstes Sicherungselement, Steg
- 13b: zweite radiale Erhebung, zweites Sicherungselement
- 13c: dritte radiale Erhebungen, dritte Sicherungselemente
- 14: Ausnehmung bzw. Nut in Umfangsrichtung
- 14a: schräge Kante der Ausnehmung 14
- 14b: senkrechte Kante der Ausnehmung 14
- 15a: erstes Markierungselement
- 15b: Vertiefung, Einkerbung, Rille
- 16: zweiter (schlauchseitiger) Kupplungsbereich
- 17: zweite radiale Erhebung, Wulst
- 18: Profilierung, Riffelung
- 19: konischer Übergangsbereich

- 20: Verriegelungselement, Verriegelungsring
- 21: (ringförmiger) Verriegelungskörper
- 22: Federelement, Steg
- 23: Spalt
- 24: Eingriffselement, Nase, Haken
- 25a: zweites Markierungselement
- 25b: zweite Erhebung, zweite Kante des Federelements 22
- 26: schräge Kante des Eingriffselements 24
- 27: senkrechte Kante des Eingriffselements 24
- 28: erste Erhebung, erste Kante des Federelements 22

- 30: Anschlusselement, Aggregatstutzen, Steckverbinder
- 31: Anschlusskörper
- 32: erste radiale Erhebung, erster Wulst
- 33: zweite radiale Erhebung, zweiter Wulst

- 40: Dichtungselement, O-Ring

- 50: Sperrelement, Sperrring

## Patentansprüche

1. Kupplungssystem (10, 20) zur Verbindung zweier medienführender Elemente, mit einem Kupplungskörper (11), welcher einen ersten Kupplungsbereich (12) zur Aufnahme eines Anschlusskörpers (31) eines medienführenden Elementes in seinem Inneren aufweist, und
einem Verriegelungskörper (21), welcher zumindest teilweise im ersten Kupplungsbereich (12) um den Kupplungskörper (11) herum angeordnet ist, wobei der Kupplungskörper (11) in seinem ersten Kupplungsbereich (12) wenigstens eine Ausnehmung (14) aufweist,
wobei der Verriegelungskörper (21) wenigstens ein Eingriffselement (24) aufweist, welches in einer ersten Position außerhalb des Inneren des Kupplungskörpers (11) positioniert ist und in einer zweiten Position durch die Ausnehmung (14) hindurch radial in das Innere des Kupplungskörpers (11) hineinragt,
wobei das Eingriffselement (24) durch eine Drehbewegung zwischen der ersten Position und der zweiten Position bewegt werden kann, und
wobei der Kupplungskörper (11) eine Vertiefung (15b) und der Verriegelungskörper (21) eine Erhebung (25b) aufweist, so dass in der zweiten Position der Drehbewegung die Erhebung (25b) in die Vertiefung (15a) eingreifen und die Drehbewegung blockieren oder erschweren kann, wobei der Kupplungskörper (11) eine erste radiale Erhebung (13a) aufweist, welche eine Bewegung des Verriegelungskörpers (21) in Längsrichtung (L) in wenigstens einer Richtung blockiert, **dadurch gekennzeichnet, dass** der Kupplungskörper (11) ferner eine zweite radiale Erhebung (13b) aufweist, welche eine Bewegung des Verriegelungskörpers (21) in Längsrichtung (L) in einer weiteren Richtung blockiert, so dass der Verriegelungskörper (21) in Längsrichtung (L) lediglich zwischen der ersten radialen Erhebung (13a) und der zweiten radialen Erhebung (13b) beweglich ist, und
wobei die zweite radiale Erhebung (13b) im ersten Kupplungsbereich (12) angeordnet und derart positioniert ist, dass sie die Drehbewegung des Verriegelungskörpers (21) in zumindest einer Richtung blockieren kann.

2. Kupplungssystem (10, 20) nach Anspruch 1,
wobei das Eingriffselement (24) in der zweiten Position soweit durch die Ausnehmung (14) radial in das Innere des Kupplungskörpers (11) hineinragt, dass das Eingriffselement (24) den im ersten Kupplungsbereich (12) aufgenommenen Anschlusskörper (31) in Längsrichtung (L) blockieren kann.

3. Kupplungssystem (10, 20) nach Anspruch 2,
wobei das Eingriffselement (24) in der zweiten Position radial hinter eine erste radiale Erhebung (32) des im ersten Kupplungsbereich (12) aufgenommenen Anschlusskörpers (31) greifen und in Längsrichtung (L) blockieren kann.

4. Kupplungssystem (10, 20) nach einem der vorherigen Ansprüche,
wobei der Verriegelungskörper (21) geschlossen ringförmig ausgebildet ist.

5. Kupplungssystem (10, 20) nach einem der vorherigen Ansprüche,
wobei der Verriegelungskörper (21) über ein Federelement (22) mit dem Eingriffselement (24) verbunden ist.

6. Kupplungssystem (10, 20) nach Anspruch 5,
wobei das Eingriffselement (24) in der ersten Position von dem Kupplungskörper (11) radial federnd weggedrückt werden kann.

7. Kupplungssystem (10, 20) nach Anspruch 5 oder 6,
wobei das Eingriffselement (24) eine schräge Kante (26) aufweist, welche sich sowohl radial als auch in Umfangsrichtung erstreckt und welche mit dem Kupplungskörper (11) in Kontakt kommen kann, so dass das Eingriffselement (24) bei der Drehbewegung über den Kontakt zwischen Kupplungskörper (11) und seiner schrägen Kante (26) von dem Kupplungskörper (11) radial federnd weggedrückt werden kann.

8. Kupplungssystem (10, 20) nach einem der vorherigen Ansprüche,
wobei der Kupplungskörper (11) ein erstes Markierungselement (15a) und der Verriegelungskörper (21) ein zweites Markierungselement (25a) aufweist, welche in der zweiten Position der Drehbewegung in Längsrichtung (L) einander direkt gegenüberliegen können.

9. Kupplungssystem (10, 20) nach einem der vorherigen Ansprüche,
wobei der Kupplungskörper (11) und der Verriegelungskörper (21) aus Kunststoff sind.

10. Kupplungssystem (10, 20) nach einem der vorherigen Ansprüche,
wobei der Kupplungskörper (11) einen zweiten Kupplungsbereich (16) mit einer zweiten radialen Erhebung (17) und/oder einer Profilierung (18) aufweist.

11. Kupplungssystem (10, 20) nach einem der vorherigen Ansprüche,
wobei im Inneren des Kupplungskörpers (11) ein Dichtungselement (40) zum Abdichten zwischen dem Kupplungskörper (11) und dem Anschlusskörpers (31) angeordnet ist.

## Claims

1. Coupling system (10, 20) for connecting two media-conducting elements, comprising a coupling body (11) which has a first coupling region (12) for accommodating in its interior a connection body (31) of a media-conducting element, and
comprising a locking body (21) which is arranged around the coupling body (11) at least partially in the first coupling region (12),
wherein the coupling body (11) has at least one recess (14) in its first coupling region (12),
wherein the locking body (21) has at least one engagement element (24) which, in a first position, is positioned outside the interior of the coupling body (11) and, in a second position, projects radially into the interior of the coupling body (11) through the recess (14),
wherein the engagement element (24) is able to be moved by a rotational movement between the first position and the second position, and
wherein the coupling body (11) has a depression (15b) and the locking body (21) has an elevation (25b), with the result that, in the second position of the rotational movement, the elevation (25b) is able to engage into the depression (15a) and block or impede the rotational movement,
wherein the coupling body (11) has a first radial elevation (13a) which blocks movement of the locking body (21) in the longitudinal direction (L) in at least one direction,
**characterized in that**
the coupling body (11) also has a second radial elevation (13b) which blocks movement of the locking body (21) in the longitudinal direction (L) in a further direction, with the result that the locking body (21) is movable in the longitudinal direction (L) only between the first radial elevation (13a) and the second radial elevation (13b), and
wherein the second radial elevation (13b) is arranged in the first coupling region (12) and positioned in such a way that it is able to block the rotational movement of the locking body (21) in at least one direction.

2. Coupling system (10, 20) according to Claim 1,
wherein, in the second position, the engagement element (24) projects radially into the interior of the coupling body (11) through the recess (14) to such an extent that the engagement element (24) is able to block the connection body (31), accommodated in the first coupling region (12), in the longitudinal direction (L).

3. Coupling system (10, 20) according to Claim 2,
wherein, in the second position, the engagement element (24) is able to engage radially behind and, in the longitudinal direction (L), block a first radial elevation (32) of the connection body (31) accommodated in the first coupling region (12) .

4. Coupling system (10, 20) according to one of the preceding claims,
wherein the locking body (21) is of closed annular form.

5. Coupling system (10, 20) according to one of the preceding claims,
wherein the locking body (21) is connected to the engagement element (24) via a spring element (22).

6. Coupling system (10, 20) according to Claim 5, wherein, in the first position, the engagement element (24) is able to be pushed away from the coupling body (11) in a radially resilient manner.

7. Coupling system (10, 20) according to Claim 5 or 6,
wherein the engagement element (24) has an oblique edge (26) which extends both radially and in the circumferential direction, and which can come into contact with the coupling body (11) such that the engagement element (24) is able to be pushed away from the coupling body (11) in a radially resilient manner via the contact between the coupling body (11) and the oblique edge (26) of said element during the rotational movement.

8. Coupling system (10, 20) according to one of the preceding claims,
wherein the coupling body (11) has a first marking element (15a) and the locking body (21) has a second marking element (25a), which elements, in the second position of the rotational movement, can directly face one another in the longitudinal direction (L).

9. Coupling system (10, 20) according to one of the preceding claims,
wherein the coupling body (11) and the locking body (21) are composed of plastic.

10. Coupling system (10, 20) according to one of the preceding claims,
wherein the coupling body (11) has a second coupling region (16) with a second radial elevation (17) and/or with a profiling (18).

11. Coupling system (10, 20) according to one of the preceding claims,
wherein a sealing element (40) for sealing between the coupling body (11) and the connection body (31) is arranged in the interior of the coupling body (11).

## Revendications

1. Système de couplage (10, 20) pour l'assemblage de deux éléments de transport de fluide, avec
un corps de couplage (11), qui présente une première zone de couplage (12) destinée à recevoir intérieurement un corps de raccordement (31) d'un élément de transport de fluide, et
un corps de verrouillage (21), qui est disposé au moins partiellement dans la première zone de couplage (12) autour du corps de couplage (11),
dans lequel le corps de couplage (11) présente au moins un évidement (14) dans sa première zone de couplage (12),
dans lequel le corps de verrouillage (21) présente au moins un élément d'engagement (24), qui dans une première position est positionné à l'extérieur de l'intérieur du corps de couplage (11) et dans une deuxième position pénètre à travers l'évidement (14) radialement dans l'intérieur du corps de couplage (11),
dans lequel l'élément d'engagement (24) peut être déplacé par un mouvement de rotation entre la première position et la deuxième position, et
dans lequel le corps de couplage (11) présente un creux (15b) et le corps de verrouillage (21) présente une saillie (25b), de telle manière que dans la deuxième position du mouvement de rotation la saillie (25b) puisse s'engager dans le creux (15a) et bloquer ou rendre difficile le mouvement de rotation,
dans lequel le corps de couplage (11) présente une première saillie radiale (13a), qui bloque un mouvement du corps de verrouillage (21) dans la direction longitudinale (L) dans au moins une direction, **caractérisé en ce que**
le corps de couplage (11) présente en outre une deuxième saillie radiale (13b), qui bloque un mouvement du corps de verrouillage (21) dans la direction longitudinale (L) dans une autre direction, de telle manière que le corps de verrouillage (21) soit mobile dans la direction longitudinale (L) uniquement entre la première saillie radiale (13a) et la deuxième saillie radiale (13b), et
dans lequel la deuxième saillie radiale (13b) est disposée et positionnée dans la première zone de couplage (12), de telle manière qu'elle puisse bloquer le mouvement de rotation du corps de verrouillage (21) dans au moins une direction.

2. Système de couplage (10, 20) selon la revendication 1, dans lequel l'élément d'engagement (24) dans la deuxième position pénètre à travers l'évidement (14) radialement dans l'intérieur du corps de couplage (11), à un point tel que l'élément d'engagement (24) puisse bloquer dans la direction longitudinale (L) le corps de raccordement (31) logé dans la première zone de couplage (12).

3. Système de couplage (10, 20) selon la revendication 2, dans lequel l'élément d'engagement (24) dans la deuxième position peut s'engager radialement derrière une première saillie radiale (32) du corps de raccordement (31) logé dans la première zone de couplage (12) et la bloquer dans la direction longitudinale (L).

4. Système de couplage (10, 20) selon l'une quelconque des revendications précédentes, dans lequel le corps de verrouillage (21) est réalisé sous forme annulaire fermée.

5. Système de couplage (10, 20) selon l'une quelconque des revendications précédentes, dans lequel le corps de verrouillage (21) est relié par un élément de ressort (22) à l'élément d'engagement (24).

6. Système de couplage (10, 20) selon la revendication 5, dans lequel l'élément d'engagement (24) dans la première position peut être repoussé radialement de façon élastique par le corps de couplage (11) .

7. Système de couplage (10, 20) selon la revendication 5 ou 6, dans lequel l'élément d'engagement (24) présente une arête oblique (26), qui s'étend aussi bien radialement qu'en direction périphérique et qui peut venir en contact avec le corps de couplage (11), de telle manière que l'élément d'engagement (24) puisse, lors du mouvement de rotation, être repoussé radialement de façon élastique par le corps de couplage (11) du fait du contact entre le corps de couplage (11) et son arête oblique (26).

8. Système de couplage (10, 20) selon l'une quelconque des revendications précédentes, dans lequel le corps de couplage (11) présente un premier élément de marquage (15a) et le corps de verrouillage (21) présente un deuxième élément de marquage (25a), qui dans la deuxième position du mouvement de rotation peuvent se faire face directement dans la direction longitudinale (L).

9. Système de couplage (10, 20) selon l'une quelconque des revendications précédentes, dans lequel le corps de couplage (11) et le corps de verrouillage (21) sont constitués de matière plastique.

10. Système de couplage (10, 20) selon l'une quelconque des revendications précédentes, dans lequel le corps de couplage (11) présente une deuxième zone de couplage (16) avec une deuxième saillie radiale (17) et/ou un profilage (18).

11. Système de couplage (10, 20) selon l'une quelconque des revendications précédentes, dans lequel un élément d'étanchéité (40) est disposé à l'intérieur du corps de couplage (11) pour assurer l'étanchéité entre le corps de couplage (11) et le corps de raccordement (31).
